# EUROPEAN PATENT SPECIFICATION

(11) **EP 4 255 964 B1**
(45) Date of publication and mention of the grant of the patent: **13.11.2024**
(21) Application number: 21819886.9
(22) Date of filing: 03.12.2021
(51) Int. Cl.: C08H 7/00, C08L 77/02, C08L 97/00, C08G 69/14

(54) **AQUEOUS LACTAM SOLUTION OF LIGNIN**
WÄSSRIGE LACTAMLÖSUNG VON LIGNIN
SOLUTION AQUEUSE DE LACTAME DE LIGNINE

(30) Priority: 07.12.2020 EP 20212269
(43) Date of publication of application: 11.10.2023
(73) Proprietor: BASF SE, 67056 Ludwigshafen am Rhein (DE)
(72) Inventor: LINDNER, Jean-Pierre Berkan, 67056 Ludwigshafen (DE); NEUMANN, Paul, 67056 Ludwigshafen (DE); JUNG, Philipp Maximilian, 67056 Ludwigshafen (DE)
(74) Representative: BASF IP Association
(86) International application number: PCT/EP2021/084123
(87) International publication number: WO 2022/122575

(56) References cited:
- WO-A1-2009/153204
- WO-A1-2009/153204
- WO-A1-2019/147895
- WO-A1-2019/147895
- CN-A- 109 054 371
- CN-A- 109 054 371
- DE-A1- 10 354 605
- DE-A1- 10 354 605
- SALLEM-IDRISSI NAÏMA ET AL: "Miscible raw lignin/nylon 6 blends: Thermal and mechanical performances", JOURNAL OF APPLIED POLYMER SCIENCE, vol. 133, no. 6, 10 February 2016 (2016-02-10), US, pages n/a - n/a, XP055798814, ISSN: 0021-8995, DOI: 10.1002/app.42963
- SALLEM-IDRISSI NAÏMA ET AL: "Miscible raw lignin/nylon 6 blends: Thermal and mechanical performances", JOURNAL OF APPLIED POLYMER SCIENCE, vol. 133, no. 6, 10 February 2016 (2016-02-10), US, pages n/a - n/a, XP055798814, ISSN: 0021-8995, DOI: 10.1002/app.42963

## Description

The present invention relates to an aqueous lactam solution, which preferably contains lignin.

The invention further relates to the use of an aqueous lactam solution as solvent, preferably for lignin. Furthermore, the invention relates to the use of such solution for producing homogeneous polyamide/lignin blends, to a process for producing these blends, a thermoplastic molding composition comprising these blends, their use and moldings, fibers and foils made there from.

Lignin is among the most abundant biopolymers in nature. Although lignin is obtained as a major side product in paper pulping, it is still used only scarcely as valuable raw material to obtain base chemicals or (functional) materials. One of the major hurdles to lignin processing is the inherent poor solubility of lignin in most solvents. Especially aqueous solvents are not able to dissolve lignin in significant amounts (e.g. > 10 wt% of lignin) unless strong basic conditions are applied. As soon as the pH drops, precipitation occurs. Efficient dissolution of lignin (e.g. > 10 wt%) can be achieved by using toxic organic solvents (e.g. pyridine and methylimidazole) or expensive ionic liquids. In order to develop new processes and strategies to utilize lignin as an attractive raw material, a simple, cost efficient and non-toxic solvent system is required, which dissolves lignin.

Lignin polymer compounds or composites are widely known. In general, polydisperse lignin powder is added in a melt blending process to thermoplastic base polymer like polyamide. The properties of the resulting lignin-polymer (lignin-polyamide) compounds are mostly depending on the compatibility and resulting homogeneity of the utilized materials. However, due to its heterogeneous structure, lignin tends to be incompatible to most industrial relevant thermoplastic polymers, which leads to inferior application properties. Therefore, a new methodology for simple production of homogeneous lignin-polymer blends is needed.

WO 2009/153204 A1 relates to compositions containing a polyamide matrix and lignin. For example, lignins obtained by the Organosolv process are added in powder form to polyamide 66 via extrusion. It was found that the lignin inhibits the water uptake of the polyamide. Furthermore, the lignin is said to act as an anti plasticizer, augments the rigidity of the polyamide matrix and has a fluidizing effect on the polyamide matrix. 1 to 15 wt% of lignin can be added to the composition.

It is stated that by using lignin in the polyamide compositions, the water uptake of the compositions can be reduced, thereby stabilizing the dimensional stability without affecting the mechanical properties. The lignin is added in powder form.

Olav Müller describes in Die Angewandte Makromolekulare Chemie 52 (1976) 85-99 (no. 759) the chemistry of lignin. Müller found that when trying to polymerize beech sulfuric acid lignin in a caprolactam melt, a light brown material having a metallic glaze is obtained. However, even at lignin amounts of less than 1% the fiber-forming properties are significantly impaired. It is mentioned that even additions of 0.5% lignin hinder the extrusion and spinning to form fibers. When adding the beech lignins to the caprolactam melt, a complete dissolution was obtained at 1 wt%. When adding 5%, 10% or 20% of beech lignin, inhomogeneous melts were obtained from which no fibers could be produced.

V. I. Vrublevskaya and L. A. Nikitchenko describe the processes taking place in wood upon modification with various types of ε-caprolactam in J. Appl. Chem. USSR (Engl. Transl.), ed. by Plenum Publishing Corporation, pages 1666 to 1669, 1982, ISSN: 0021-888X (Zhurnal Prikladnoi Khimii, vol. 54, no. 8, 1908-1911, August 1981). The authors modified wood by filling it with a melt of ε-caprolactam and subsequent polymerizing, leading to the polymerization of ε-caprolactam in the porous capillary wood system. Anionic and hydrolytic ε-caprolactam polymerization was used, but the anionic polymerization led to the chemical destruction of the wood system, causing a drop in thermal stability and strength characteristics and an increase in swelling. The hydrolytically polymerized mixture showed the formation of a new substance which is more heat resistant than lignin since its thermal decomposition begins only at 230°C.

The object underlying the present invention is to provide homogeneous polyamide/lignin blends and a lignin solution capable of forming homogeneous polyamide/lignin blends.

The object is achieved by the use of an aqueous lactam solution having a lactam content of 50 to 95 wt%, based on the total weight of water and lactam in the solution, as solvent.

The object is furthermore achieved by the use of an aqueous lactam solution having a lactam content of 50 to 95 wt%, based on the total weight of water and lactam in the solution, and further containing 0.1 to 40 wt% of cross-linked phenolic polymers, preferably lignin, based on the amount of lactam in the solution, for producing homogeneous polyamide/lignin blends.

The invention also relates to a process for producing homogeneous polyamide/lignin blends, involving the steps of ring-opening polymerizing of aqueous lactam with removal of water of an aqueous solution initially containing water and 50 to 95 wt% of lactam, based on the total weight of water and lactam in the solution and further containing 0.1 to 40 wt% of cross-linked phenolic polymers, preferably lignin, based on the amount of lactam in the solution.

Furthermore, the invention relates to a thermoplastic molding composition comprising
a) 40 to 100 wt% of a homogeneous polyamide/lignin blend containing 0.1 to 40 wt%, based on the amount of polyamide, of lignin, the polyamide containing polymerized lactam units, as component A,
b) 0 to 10 wt% of a polyamide not containing polymerized lactam units, as component B,
c) 0 to 45 wt% of at least one elastomeric polymer, as component C,
d) 0 to 60 wt% of at least one fibrous and/or particulate filler, as component D,
e) 0 to 25 wt% of further additives, as component E,
wherein the total of wt% of components A to E is 100 wt%.

Furthermore, the invention relates to the use of this thermoplastic molding composition for forming moldings, fibers or foils.

Finally, the present invention also refers to the moldings, fibers or foils made from this thermoplastic molding composition.

The present invention allows for efficient dissolution of lignin in non-toxic and non-expensive solvents, which are also employed for forming the polyamide matrix afterwards. According to the prior art, the dissolution of lignin was achieved with either toxic solvents or expensive ionic liquids.

The present invention overcomes the problem of lignin and polyamide compounds often being incompatible. The present invention allows for the formation of homogeneous lignin/polyamide blends or compounds.

Thereby, it is possible by a simple method to incorporate lignin very homogeneously in polyamide polymers, for example in order to increase the bio-based content and to reduce the product carbon footprint of polyamides. Furthermore, the advantages mentioned in WO 2009/153204 A1 can probably be achieved.

According to the present invention it was found that aqueous lactam solutions, preferably ε-caprolactam solutions, having a caprolactam content of 50 to 95 wt% are good solvents for organic compounds, preferably cross-linked phenolic polymers, more preferably for lignin.

The expression "caprolactam" typically refers to "ε-caprolactam" in a context of the present invention.

Lignin is a class of complex organic polymers that form key structural materials in the support tissues of vascular plants and some algae. Lignins are important in the formation of cell walls, especially in wood and bark. They lend rigidity to the wood and bark and do no rot easily. Chemically, lignins are cross-linked phenolic polymers. In particular, Lignins are high-molecular weight, aromatic compounds found in plants comprising hydroxylated and methoxylated phenylpropene units like 4-hydroxycinnamic alcohol (p-cumaryl alcohol), coniferyl alcohol and/or sinapyl alcohol, (so-called monolignols) units. The monomer units may be linked by different types of linkages between the monomeric units.

Lignins may be obtained e.g. by the sulfate process (Kraft lignin), soda process and/or organosolv-process (Organosolv lignin). Processes to obtain lignin are e.g. described in US4507172, CA2256923, EP3156409, WO2013/070130, DE3901662, WO2012/027767 and/or WO2006/038863. Lignin may be also precipitated as lignin solid out of a Kraft pulp mill "black liquor" stream by acidification and filtration (e.g. by the LignoBoost^{™} process described in US20170355723 or equivalent approaches). Lignins may be also obtained by enzymatic degradation processes (WO2020144115, EP3743514).

Lignin as a component of plants is typically obtained in admixture with cellulosic or hemicellulosic materials. Several processes exist to separate the lignin from the cellulose/hemicellulose composite material. One example of a commercially applied process is the Kraft process, which is applied in the paper industry, resulting in lignin as a by-product or waste product. As an alternative, extract lignin can be employed, as described in WO 2009/153204 on pages 4 and 5.

The lignin used for the present invention is preferably derived from hardwood (e.g. eucalyptus), softwood (e. g. spruce and/or pine), grass, straw and/or other biomass.

It is generally known that lignin is a hard to dissolve biopolymer. Numerous attempts have been taken to find suitable solvents for dissolving lignin. Usually toxic organic solvents (DMSO, pyridine), expensive ionic liquids, deep eutectic solvent mixtures or aqueous mixtures of ionic liquids/water or organic solvents/water are used. However, no solvent system has been described that employs caprolactam aqueous solutions. Therefore, the below described findings represent a new methodology to dissolve lignin.

The solvent system for dissolving the lignin is an aqueous lactam solution, preferably ε-caprolactam solution having a (capro)lactam content of 50 to 95 wt%, preferably 75 to 95 wt%, more preferably 78 to 87 wt%, for example around 80 wt% of caprolactam, based on the total weight of water and lactam in the solution.

According to the present invention, the aqueous solution has preferably a pH value in the range of from 1 to 14, more preferably 3 to 10, most preferably 5 to 8.

The aqueous (capro)lactam solution having the above concentration is an ideal solvent for lignin, to which lignin can be added at ambient, elevated or lowered temperatures. Typically, lignin is dissolved in the solvent system at room temperature (20 to 25°C). The lignin is preferably employed in powder form to ease the dissolving process.

The aqueous (capro)lactam solution of lignin preferably does not contain or is free of (further) organic solvents, such as DMSO or pyridine, ionic liquids and eutectic solvent mixtures.

Preferably, the aqueous (capro)lactam solutions only contain water and (capro)lactam. Additives like surfactants or colorants are preferably employed in amounts of 0 to 5 wt%, more preferably 0 to 2 wt%, more preferably 0 to 1 wt%, based on the total weight of the solution. Therefore, preferably, the aqueous (capro)lactam solution employed as solvent system consists of water, 50 to 95 wt% (capro)lactam and 0 to 5 wt% of additives, based on the total weight of the solution. The above-mentioned preferred amounts apply.

If necessary or desired, pH-adjusting agents can be added to adjust the pH of the aqueous (capro)lactam solution or to make it pH-neutral (pH = 5 to 8). Typically, inorganic or organic acids or bases, or buffers can be employed in minor amounts to achieve the desired pH value or neutrality of the solution. These pH-adjusting agents can be also considered as (part of) the additives mentioned above.

The aqueous (capro)lactam solution can be employed as solvent, preferably for organic compounds, more preferably for cross-linked phenolic polymers, especially for lignin.

The lactam employed in the aqueous solution is preferably chosen from C₄₋₁₃ lactams, more preferably C₆₋₁₀ lactams. Examples of these are caprolactam, caprylolactam, and laurolactam, pyrrolidone, ethanolactam, 9-aminopelargonic acid, 11-aminoundecanoic acid.

Most preferred is ε-caprolactam. It is also possible to employ mixtures of ε-caprolactam with smaller amounts of other lactams. In this case, the amount of lactams different from ε-caprolactams is preferably 0 to 20 wt%, more preferably 0 to 10 wt%, most preferably 0 to 5 wt%, based on the total amount of lactam in the solution.

As component A, the thermoplastic molding materials can comprise at least one copolyamide produced by polymerization of the components
A') 15 to 84 wt% of at least one lactam,
B') 16 to 85 wt% of a monomer mixture (M) comprising the components
   B1') at least one C₃₂-C₄₀ dimer acid and
   B2') at least one C₄-C₁₂ diamine,
wherein the percentages by weight of the components A') and B') are in each case based on the sum of the percentages by weight of the components A') and B').

In the context of the present invention the terms "component A')" and "at least one lactam" are used synonymously and therefore have the same meaning.

The same applies for the terms "component B')" and "monomer mixture (M)". These terms are likewise used synonymously in the context of the present invention and therefore have the same meaning.

According to the invention at least one copolyamide is produced by polymerization of 15 to 84 wt% of the component A') and 16 to 85 wt% of the component B'), preferably by polymerization of 40 to 83 wt% of the component A') and 17 to 60 wt% of the component B') and especially preferably by polymerization of 60 to 80 wt% of the component A') and 20 to 40 wt% of the component B'), wherein the percentages by weight of the components A') and B') are in each based on the sum of the percentages by weight of the components A') and B').

The sum of the percentages by weight of the components A') and B') is preferably 100 wt%.

It will be appreciated that the weight percentages of the components A') and B') relate to the weight percentages of the components A') and B') prior to the polymerization, i.e. when the components A') and B') have not yet reacted with one another. During the polymerization of the components A') and B') the weight ratio of the components A') and B') may optionally change.

According to the invention the at least one copolyamide is produced by polymerization of the components A') and B'). The polymerization of the components A') and B') is known to those skilled in the art. The polymerization of the components A') with B') is typically a condensation reaction. During the condensation reaction the component A') reacts with the components B1') and B2') present in the component B') and optionally with the component B3') described hereinbelow which may likewise be present in the component B'). This causes amide bonds to form between the individual components. During the polymerization the component A') is typically at least partially in open chain form, i.e. in the form of an amino acid.

The polymerization of the components A') and B') may take place in the presence of a catalyst. Suitable catalysts include all catalysts known to those skilled in the art which catalyze the polymerization of the components A') and B'). Such catalysts are known to those skilled in the art. Preferred catalysts are phosphorus compounds, for example sodium hypophosphite, phosphorous acid, triphenylphosphine or triphenyl phosphite.

The polymerization of the components A') and B') forms the at least one copolyamide which therefore comprises units derived from the component A') and units derived from the component B'). Units derived from the component B') comprise units derived from the components B1') and B2') and optionally from the component B3').

The polymerization of the components A') and B') forms the copolyamide as a copolymer. The copolymer may be a random copolymer. It may likewise be a block copolymer.

Formed in a block copolymer are blocks of units derived from the component B') and blocks of units derived from the component A'). These appear in alternating sequence. In a random copolymer units derived from the component A') alternate with units derived from the component B'). This alternation is random. For example two units derived from the component B') may be followed by one unit derived from the component A') which is followed in turn by a unit derived from the component B') and then by a unit comprising three units derived from the component A').

It is preferable when the at least one copolyamide is a random copolymer.

Production of the at least one copolyamide preferably comprises steps of:
I) polymerizing the components A') and B') to obtain at least a first copolyamide,
II) pelletizing the at least one first copolyamide obtained in step I) to obtain at least one pelletized copolyamide,
III) extracting the at least one pelletized copolyamide obtained in step II) with water to obtain at least one extracted copolyamide,
IV) drying the at least one extracted copolyamide obtained in step III) at a temperature (T_{T}) to obtain the at least one copolyamide,

The polymerization in step I) may be carried out in any reactor known to those skilled in the art. Preference is given to stirred tank reactors. It is also possible to use auxiliaries known to those skilled in the art, for example defoamers such as polydimethylsiloxane (PDMS), to improve reaction management.

In step II) the at least one first copolyamide obtained in step I) may be pelletized by any methods known to those skilled in the art, for example by strand pelletization or underwater pelletization.

The extraction in step III) may be effected by any methods known to those skilled in the art.

During the extraction in step III) byproducts typically formed during the polymerization of the components A') and B') in step I) are extracted from the at least one pelletized copolyamide.

In step IV) the at least one extracted copolyamide obtained in step III) is dried. Processes for drying are known to those skilled in the art. According to the invention the at least one extracted copolyamide is dried at a temperature (T_{T}). The temperature (T_{T}) is preferably above the glass transition temperature (T_{G(C)}) of the at least one copolyamide and below the melting temperature (T_{M(C)}) of the at least one copolyamide.

The drying in step IV) is typically carried out for a period in the range from 1 to 100 hours, preferably in the range from 2 to 50 hours and especially preferably in the range from 3 to 40 hours.

It is thought that the drying in step IV) further increases the molecular weight of the at least one copolyamide.

The at least one copolyamide - without addition of component B - typically has a glass transition temperature (T_{G(C)}). The glass transition temperature (T_{G(C)}) is for example in the range from 20 °C to 50 °C, preferably in the range from 23 °C to 47 °C and especially preferably in the range from 25 °C to 45 °C determined according to ISO 11357-2:2014.

In the context of the present invention the glass transition temperature (T_{G(C)}) of the at least one copolyamide is based, in accordance with ISO 11357-2:2014, on the glass transition temperature (T_{G(C)}) of the dry copolyamide.

In the context of the present invention "dry" is to be understood as meaning that the at least one copolyamide comprises less than 1 wt%, preferably less than 0.5 wt%, and especially preferably less than 0.1 wt% of water based on the total weight of the at least one copolyamide. "Dry" is more preferably to be understood as meaning that the at least one copolyamide comprises no water and most preferably that the at least one copolyamide comprises no solvent.

In addition, the at least one copolyamide typically has a melting temperature (T_{M(C)}). The melting temperature (T_{M(C)}) of the at least one copolyamide is, for example, in the range from 150 to 210 C, preferably in the range from 160 to 205°C and especially preferably in the range from 160 to 200°C determined according to ISO 11357-3:2014.

The at least one copolyamide generally has a viscosity number (VN(c)) in the range from 150 to 300 ml/g determined in a 0.5% by weight solution of the at least one copolyamide in a mixture of phenol/o-dichlorobenzene in a weight ratio of 1:1.

It is preferable when the viscosity number (VN_{(C)}) of the at least one copolyamide is in the range from 160 to 290 mL/g and particularly preferably in the range from 170 to 280 mL/g determined in a 0.5% by weight solution of the at least one copolyamide in a mixture of phenol/o-dichlorobenzene in a weight ratio of 1:1.

### Component A')

According to the invention the component A') is at least one lactam.

In the context of the present invention "at least one lactam" is understood as meaning either precisely one lactam or a mixture of 2 or more lactams.

Lactams are known per se to those skilled in the art. Preferred according to the invention are lactams having 4 to 12 carbon atoms.

In the context of the present invention "lactams" are to be understood as meaning cyclic amides having preferably 4 to 12 carbon atoms, particularly preferably 5 to 8 carbon atoms, in the ring.

Suitable lactams are for example selected from the group consisting of 3-aminopropanolactam (propio-3-lactam; β-lactam; β-propiolactam), 4-aminobutanolactam (butyro-4-lactam; γ-lactam; γ-butyrolactam), aminopentanolactam (2-piperidinone; δ-lactam; δ-valerolactam), 6-aminohexanolactam (hexano-6-lactam; ε-lactam; ε-caprolactam), 7-aminoheptanolactam (heptano-7-lactam; ζ-lactam; ζ-heptanolactam), 8-aminooctanolactam (octano-8-lactam; η-lactam; η-octanolactam), 9-aminononanolactam (nonano-9-lactam; θ-lactam; θ-nonanolactam), 10-aminodecanolactam (decano-10-lactam; ω-decanolactam), 11-aminoundecanolactam (undecano-11-lactam; ω-undecanolactam) and 12-aminododecanolactam (dodecano-12-lactam; ω-dodecanolactam).

The present invention therefore also provides a process where the component A') is selected from the group consisting of 3-aminopropanolactam, 4-aminobutanolactam, 5-aminopentanolactam, 6-aminohexanolactam, 7-aminoheptanolactam, 8-aminooctanolactam, 9-aminononanolactam, 10-aminodecanolactam, 11-aminoundecanolactam and 12-aminododecanolactam.

The lactams may be unsubstituted or at least monosubstituted. If at least monosubstituted lactams are used, the nitrogen atom and/or the ring carbon atoms thereof may bear one, two, or more substituents selected independently of one another from the group consisting of C₁ to C₁₀ alkyl, C₅ to C₆ cycloalkyl, and C₅ to C₁₀ aryl.

Suitable C₁- to C₁₀-alkyl substituents are, for example, methyl, ethyl, propyl, isopropyl, n-butyl, sec-butyl, and tert-butyl. A suitable C₅- to C₆-cycloalkyl substituent is for example cyclohexyl. Preferred C₅- to C₁₀-aryl substituents are phenyl or anthranyl.

It is preferable to employ unsubstituted lactams, γ-lactam (γ-butyrolactam), δ-lactam (δ-valerolactam) and ε-lactam (ε-caprolactam) being preferred. Particular preference is given to δ-lactam (δ-valerolactam) and ε-lactam (ε-caprolactam), ε-caprolactam being especially preferred.

### Monomer mixture (M)

According to the invention the component B') is a monomer mixture (M). The monomer mixture (M) comprises the components B1'), at least one C₃₂-C₄₀ dimer acid, and B2'), at least one C₄-C₁₂diamine.

In the context of the present invention a monomer mixture (M) is to be understood as meaning a mixture of two or more monomers, wherein at least components B1') and B2') are present in the monomer mixture (M).

In the context of the present invention the terms "component B1')" and "at least one C₃₂-C₄₀ dimer acid" are used synonymously and therefore have the same meaning. The same applies for the terms "component B2')" and "at least one C₄-C₁₂ diamine". These terms are likewise used synonymously in the context of the present invention and therefore have the same meaning.

The monomer mixture (M) comprises, for example, in the range from 45 to 55 mol% of the component B1') and in the range from 45 to 55 mol% of the component B2') in each case based on the sum of the mole percentages of the components B1') and B2'), preferably based on the total amount of substance of the monomer mixture (M).

It is preferable when the component B') comprises in the range from 47 to 53 mol% of component B1') and in the range from 47 to 53 mol% of component B2') in each case based on the sum of the mole percentages of the components B1') and B2'), preferably based on the total amount of substance of the component B').

It is particularly preferable when the component B') comprises in the range from 49 to 51 mol% of the component B1') and in the range from 49 to 51 mol% of the component B2') in each case based on the sum total of the mole percentages of the components B1') and B2'), preferably based on the total amount of substance of the component B').

The mole percentages of the components B1') and B2') present in the component B') typically sum to 100 mol%.

The component B') may additionally comprise a component B3'), at least one C₄-C₂₀ diacid.

In the context of the present invention, the terms "component B3')" and "at least one C₄-C₂₀ diacid" are used synonymously and therefore have the same meaning.

When the component B') additionally comprises the component B3') it is preferable when component B') comprises in the range from 25 to 54.9 mol% of the component B1'), in the range from 45 to 55 mol% of the component B2') and in the range from 0.1 to 25 mol% of the component B3') in each case based on the total amount of substance of the component B').

It is particularly preferable when the component B') then comprises in the range from 13 to 52.9 mol% of the component B1'), in the range from 47 to 53 mol% of the component B2') and in the range from 0.1 to 13 mol% of the component B3') in each case based on the total amount of substance of the component B').

It is most preferable when the component B') then comprises in the range from 7 to 50.9 mol% of the component B1'), in the range from 49 to 51 mol% of the component B2') and in the range from 0.1 to 7 mol% of the component B3') in each case based on the total amount of substance of the component B').

When component B') additionally comprises the component B3') the mole percentages of the components B1'), B2') and B3') typically sum to 100 mol%.

The monomer mixture (M) may further comprise water.

The components B1') and B2') and optionally B3') of the component B') can react with one another to obtain amides. This reaction is known per se to those skilled in the art. The component B') may therefore comprise components B1'), B2') and optionally B3') in fully reacted form, in partially reacted form or in unreacted form. It is preferable when the component B') comprises the components B1'), B2') and optionally B3') in unreacted form.

In the context of the present invention "in unreacted form" is thus to be understood as meaning that the component B1') is present as the at least one C₃₂-C₄₀ dimer acid and the component B2') is present as the at least one C₄-C₁₂-diamine and optionally the component B3') is present as the at least one C₄-C₂₀ diacid.

If the components B1') and B2') and optionally B3') have at least partly reacted the components B1') and B2') and any B3') are thus at least partially in amide form.

### Component B1')

According to the invention the component B1') is at least one C₃₂-C₄₀ dimer acid.

In the context of the present invention "at least one C₃₂-C₄₀ dimer acid" is to be understood as meaning either precisely one C₃₂-C₄₀-dimer acid or a mixture of two or more C₃₂-C₄₀ dimer acids.

Dimer acids are also referred to as dimer fatty acids. C₃₂-C₄₀ dimer acids are known per se to those skilled in the art and are typically produced by dimerization of unsaturated fatty acids. This dimerization may be catalyzed by argillaceous earths for example.

Suitable unsaturated fatty acids for producing the at least one C₃₂-C₄₀ dimer acid are known to those skilled in the art and are for example unsaturated C₁₆-fatty acids, unsaturated C₁₈ fatty acids and unsaturated C₂₀ fatty acids.

### Component B2')

According to the invention the component B2') is at least one C₄-C₁₂ diamine.

In the context of the present invention "at least one C₄-C₁₂ diamine" is to be understood as meaning either precisely one C₄-C₁₂ diamine or a mixture of two or more C₄-C₁₂ diamines.

In the context of the present compound, "C₄-C₁₂ diamine" is to be understood as meaning aliphatic and/or aromatic compounds having four to twelve carbon atoms and two amino groups (-NH₂ groups). The aliphatic and/or aromatic compounds may be unsubstituted or additionally at least monosubstituted. If the aliphatic and/or aromatic compounds are additionally at least monosubstituted, they may bear one, two or more substituents that do not take part in the polymerization of the components A') and B'). Such substituents are for example alkyl or cycloalkyl substituents. These are known per se to those skilled in the art. The at least one C₄-C₁₂ diamine is preferably unsubstituted.

Suitable components B2') are for example selected from the group consisting of 1,4-diaminobutane (butane-1,4-diamine; tetramethylenediamine; putrescine), 1,5-diaminopentane (pentamethylenediamine; pentane-1,5-diamine; cadaverine), 1,6-diaminohexane (hexamethylenediamine; hexane-1,6-diamine), 1,7-diaminoheptane, 1,8-diaminooctane, 1,9-diaminononane, 1,10-diaminodecane (decamethylenediamine), 1,11-diaminoundecane (undecamethylenediamine) and 1,12-diaminododecane (dodecamethylenediamine).

It is preferable when the component B2') is selected from the group consisting of tetramethylenediamine, pentamethylenediamine, hexamethylenediamine, decamethylenediamine and dodecamethylenediamine.

### Component B3')

According to the invention, the component B3') optionally present in the component B') is at least one C₄-C₂₀ diacid.

In the context of the present invention, "at least one C₄-C₂₀ diacid" is to be understood as meaning either precisely one C₄-C₂₀ diacid or a mixture of two or more C₄-C₂₀ diacids.

In the context of the present invention "C₄-C₂₀ diacid" is to be understood as meaning aliphatic and/or aromatic compounds having two to eighteen carbon atoms and two carboxyl groups (-COOH groups). The aliphatic and/or aromatic compounds may be unsubstituted or additionally at least monosubstituted. If the aliphatic and/or aromatic compounds are additionally at least monosubstituted, they may bear one, two or more substituents that do not take part in the polymerization of components A') and B'). Such substituents are for example alkyl or cycloalkyl substituents. These are known to those skilled in the art. Preferably, the at least one C₄-C₂₀ diacid is unsubstituted.

Suitable components B3') are for example selected from the group consisting of butanedioic acid (succinic acid), pentanedioic acid (glutaric acid), hexanedioic acid (adipic acid), heptanedioic acid (pimelic acid), octanedioic acid (suberic acid), nonanedioic acid (azelaic acid), decanedioic acid (sebacic acid), undecanedioic acid, dodecanedioic acid, tridecanedioic acid, tetradecanedioic acid and hexadecanedioic acid.

It is preferable when the component B3') is selected from the group consisting of pentanedioic acid (glutaric acid), hexanedioic acid (adipic acid), decanedioic acid (sebacic acid) and dodecanedioic acid.

It is particularly preferable when the component is PA 6/6.6 and/or PA 6/6.36, for example having a melting point of 190 to 210°C, specifically having a melting point of 195 to 200°C, more specifically 196 to 199°C, and/or a (polymerized) caprolactam content of 60 to 80 wt%, more preferably 65 to 75 wt%, specifically 67 to 70 wt%, the remainder being PA 6.36 units derived from hexamethylene diamine and C₃₆ diacid.

The solution according to the present invention can be employed to form blends of homopolyamides. Furthermore, it is possible to add comonomers to form copolyamides. For example, adipic acid/hexamethylene diamine salt (AH salt) or hexamethylene diamine/C₃₆-acid salt (6.36 salt) can be added to the solution. Based on the amount of lactam in the solution, the amount of comonomers, when present, is preferably in the range of 40 to 5 wt%, more preferably 30 to 10 wt%.

Most preferably, ε-caprolactam is the only lactam in the solution and furthermore is the only organic component of the solution apart from cross-linked phenolic polymers or lignin and possibly surfactant and/or colorant.

The solution is used as solvent for dissolving cross-linked phenolic polymers, more precisely lignin. Therefore, the solution preferably further contains 0.1 to 40 wt%, more preferably 0.5 to 30 wt%, most preferably 1 to 20 wt% of cross-linked phenolic polymers, preferably lignin, based on the amount of (capro)lactam in the solution.

In the solution, the lower limit for the lignin content can be 0.1 wt%, preferably 0.5 wt%, more preferably 1 wt%, even more preferably 1.5 wt%, specifically 2 wt%, more specifically 5 wt%. Each of these lower limits can be combined with an upper limit, selected from 40 wt%, preferably 30 wt%, more preferably 20 wt% to form a preferred range.

It is specifically preferred that the amount of lignin is more than 1 wt% and preferably at least 1.5 wt%, more preferably at least 2 wt%, most preferably at least 5 wt%.

The dissolving of the lignin can be performed by known means and methods. Typically, a stirring of the solution is helpful for easing the dissolution.

The aqueous (capro)lactam solution of the cross-linked phenolic polymers, preferably lignin, can be used for producing homogeneous polyamide/lignin blends, preferably polyamide 6/lignin blends.

The expression "homogeneous" means that polyamide chains and cross-linked phenolic polymers are preferably mixed on a molecular level. Preferably, domain sizes of lignin inside the polyamide matrix are not more than 50 µm, more preferably not more than 25 µm, most preferably not more than 10 µm. Typically, no lignin domains can be seen under a normal light microscope employing 240 to 360 x magnification.

Homogeneous polyamide/lignin blends are obtained according to the present invention by polymerizing the lactam in the solution containing lactam, water and dissolved lignin. Thereby, a mixture of polyamide and lignin can be achieved on a molecular level.

Preferably, the homogeneous polyamide/lignin blends are produced by a process involving the steps of ring-opening polymerizing of the aqueous lactam with removal of water (e.g. throughout the polymerization) of an aqueous solution initially containing water and 50 to 95 wt% of lactam, based on the total weight of water and lactam in the solution and further containing 0.1 to 40 wt% of cross-linked phenolic polymers, preferably lignin, based on the amount of lactam in the solution.

Again, the lactam is preferably ε-caprolactam, and the polyamide is preferably polyamide 6.

The resulting polyamide/lignin blend typically has a lignin content of 0.1 to 40 wt%, more preferably 0.5 to 30 wt%, most preferably 1 to 20 wt%. Specifically preferred is a lower limit of the lignin content of 1.5 wt%, more preferably 2 wt%, most preferably 5 wt%, the upper limit being 40 wt%, preferably 30 wt%, more preferably 20 wt%.

The polyamide/lignin blends can be employed for forming a thermoplastic molding composition by adding further components.

The invention also relates to a thermoplastic molding composition comprising
a) 40 to 100 wt% of a homogeneous polyamide/lignin blend containing 0.1 to 40 wt%, based on the amount of polyamide, of lignin, the polyamide containing polymerized lactam units, as component A,
b) 0 to 10 wt% of a polyamide not containing polymerized lactam units, as component B,
c) 0 to 45 wt% of at least one elastomeric polymer as component C,
d) 0 to 60 wt% of at least one fibrous and/or particulate filler as component D,
e) 0 to 25 wt% of further additives as component E,
wherein the total of wt% of components A to E is 100 wt%.

In this composition, component A is preferably obtainable by a process involving the ring-opening polymerization of aqueous lactam with removal of water of an aqueous solution, initially containing water and 50 to 95 wt% of lactam, based on the total weight of water and lactam in the solution, and further containing 0.1 to 40 wt% of cross-linked phenolic polymers, preferably lignin, based on the amount of lactam in the solution.

The further components will be described in the following. As component B, the thermoplastic molding composition can contain 0 to 10 wt%, more preferably 0 to 5 wt%, most preferably 0 to 2.5 wt% of a polyamide not containing polymerized lactam units. Thus, the polyamide component B is structurally different from the polyamide included in component A. In the following, possible polyamides of component B are described.

The polyamides of component B can have an intrinsic viscosity of from 90 to 350 ml/g, preferably from 110 to 240 ml/g, determined in a 0.5% strength by weight solution in 96% strength by weight sulfuric acid at 25°C according to ISO 307, unless indicated otherwise.

Preference is given to semicrystalline or amorphous resins with a molecular weight (weight average) of at least 5000, described by way of example in the following US patents: 2 071 250, 2 071 251, 2 130 523, 2 130 948, 2 241 322, 2 312 966, 2 512 606, and 3 393 210.

Dicarboxylic acids which may be used are alkanedicarboxylic acids having from 6 to 12, in particular from 6 to 10 carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, and 1,5-dia-mino-2-methylpentane.

Preferred polyamides are polyhexamethyleneadipamide, polyhexamethylenesebacamide for B, and also nylon-6/6,6 copolyamides, in particular having a proportion of from 5 to 95 wt% of caprolactam units (e.g. Ultramid^{®} C31 from BASF SE), for use in component A.

Mention may also be made of polyamides obtainable, by way of example, via condensation of 1,4-diaminobutane with adipic acid at an elevated temperature (nylon 4,6). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of nylon 6,6 with other polyamides, in particular blends of nylon 6 (in component A) and nylon 66 (as component B), and to nylon 6/6,6 copolyamides and nylon 6,6/6 copolyamides (in component A).

Other copolyamides which have proven particularly advantageous are semiaromatic copolyamides in component A, such as PA 6/6T and PA 66/6T, where the triamine content of these is less than 0.5 wt%, preferably less than 0.3 wt% (see EP-A 299 444). Other polyamides resistant to high temperatures are known from EP-A 19 94 075 (PA 6T/6I/MXD6).

The processes described in EP-A 129 195 and 129 196 can be used to prepare the preferred semiaromatic copolyamides with low triamine content.

The following list, which is not comprehensive, comprises the polyamides of component A mentioned above (if lactam is part of the monomer) and other polyamides B) for the purposes of the invention, and the monomers comprised in the polyamides:

### AA/BB polymers:

| | |
|---|---|
| PA 46 | Tetramethylenediamine, adipic acid |
| PA 66 | Hexamethylenediamine, adipic acid |
| PA 69 | Hexamethylenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |

| | |
|---|---|
| AA/BB polymers | (belonging to component A if lactam is copolymerized): |
| PA 6I | Hexamethylenediamine, isophthalic acid |
| PA 6-3-T | Trimethylhexamethylenediamine, terephthalic acid |
| PA 6/6.36 | (see below) |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |

Preferred polyamides are PA 6, PA 66, PA 6/66, PA 66/6, PA 12, PA 6.10, PA 6T/6, PA 6I/6T, PA 6T/6I, PA 9T, PA 4T, and copolyamides produced by polymerization of the components
A') 15 to 84 wt% of at least one lactam,
B') 16 to 85 wt% of a monomer mixture (M) comprising the components
   B1') at least one C₃₂-C₄₀ dimer acid and
   B2') at least one C₄-C₁₂ diamine,

wherein the percentages by weight of the components A') and B') are in each case based on the sum of the percentages by weight of the components A') and B'),
specifically PA 6/6.6 and/or PA 6/6.36.

Most preferred polyamides are PA 6, PA 66, PA 6/66 and PA 66/6 as well as PA 6/6.36.

Suitable copolyamides are more particularly elucidated in DE-A-10 2009 011 668.

As component C, the molding compositions of the present invention can comprise 0 to 45 wt%, preferably 0 to 40 wt% of at least one elastomeric polymer.

If the elastic polymer is present, the minimum amount is preferably 1 wt%, more preferably 2 wt%, most preferably 5 wt%. Thus, if the elastomeric polymer of component C is present in the molding compositions, the amount is preferably 1 to 45 wt%, more preferably 2 to 40 wt%, most preferably 5 to 40 wt%. In this case the maximum amount of component A is decreased by the minimum amount of component C.

Component C can be selected from all elastomeric polymers, impact modifiers, elastomers or rubbers which are suitable for polyamide molding compositions.

Preferably, component C is selected from
b1) copolymers of ethylene with at least one comonomer selected from C₃₋₁₂ olefins, C₁₋₁₂ alkyl (meth)acrylates, (meth)acrylic acid and maleic anhydride, as component B1),
b2) polyethylene or polypropylene, as component B2),
wherein components B1) and B2) may also be additionally grafted with maleic anhydride, preferably from ethylene-propylene rubbers, ethylene-propylene-diene-rubbers, ethylene-butyl acrylate copolymers, copolymers of ethylene and/or propylene and maleic anhydride and mixtures thereof.

These elastomeric polymers (also often termed impact modifiers, elastomers, or rubbers) are very generally copolymers preferably composed of at least two of the following monomers: ethylene, propylene, butadiene, isobutene, isoprene, chloroprene, vinyl acetate, styrene, acrylonitrile and acrylates and/or methacrylates having from 1 to 18 carbon atoms in the alcohol component.

Polymers of this type are described, for example, in Houben-Weyl, Methoden der organischen Chemie, vol. 14/1 (Georg-Thieme-Verlag, Stuttgart, Germany, 1961), pages 392 to 406, and in the monograph by C.B. Bucknall, Toughened Plastics (Applied Science Publishers, London, UK, 1977).

As component D, the thermoplastic molding composition contains 0 to 60 wt%, preferably 0 to 50 wt%, more preferably 0 to 40 wt% of at least one fibrous and/or particulate filler.

Preferably, component D comprises glass fibers and is present in an amount of from 10 to 60 wt%, more preferably 15 to 50 wt%, most preferably 20 to 40 wt%.

If component D is present, the maximum amount of component A is decreased by the minimum amount of component D, so that the total amount of components A to E is still 100 wt%.

Fibrous or particulate fillers D that may be mentioned are carbon fibers, glass fibers, glass beads, amorphous silica, calcium silicate, calcium metasilicate, magnesium carbonate, kaolin, chalk, powdered quartz, mica, barium sulfate, and feldspar.

Preferred fibrous fillers that may be mentioned are carbon fibers, aramid fibers, and potassium titanate fibers, particular preference being given to glass fibers in the form of E glass. These can be used as rovings or in the commercially available forms of chopped glass.

The fibrous fillers may have been surface-pretreated with a silane compound to improve compatibility with the thermoplastic.

Suitable silane compounds have the general formula:

(X-(CH₂)ₙ)ₖ-Si-(O-CₘH₂ₘ₊₁)₄₋ₖ

where the definitions of the substituents are as follows: 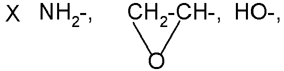
n is a whole number from 2 to 10, preferably 3 to 4,
m is a whole number from 1 to 5, preferably 1 to 2, and
k is a whole number from 1 to 3, preferably 1.

Preferred silane compounds are aminopropyltrimethoxysilane, aminobutyltrimethoxysilane, aminopropyltriethoxysilane and aminobutyltriethoxysilane, and also the corresponding silanes which comprise a glycidyl group as substituent X.

The amounts of the silane compounds generally used for surface-coating are from 0.01 to 2 wt%, preferably from 0.025 to 1.0 wt% and in particular from 0.05 to 0.5 wt% (based on component D).

Acicular mineral fillers are also suitable.

For the purposes of the invention, acicular mineral fillers are mineral fillers with strongly developed acicular character. An example is acicular wollastonite. The mineral preferably has an L/D (length to diameter) ratio of from 8:1 to 35:1, preferably from 8:1 to 11:1. The mineral filler may optionally have been pretreated with the abovementioned silane compounds, but the pretreatment is not essential.

Other fillers which may be mentioned are kaolin, calcined kaolin, wollastonite, talc and chalk, and also lamellar or acicular nanofillers, the amounts of these preferably being from 0.1 to 10%. Materials preferred for this purpose are boehmite, bentonite, montmorillonite, vermiculite, hectorite, and laponite. The lamellar nanofillers are organically modified by prior art methods, to give them good compatibility with the organic binder. Addition of the lamellar or acicular nanofillers to the inventive nanocomposites gives a further increase in mechanical strength.

As component E, the molding compositions of the present invention can contain 0 to 25 wt%, preferably 0 to 20 wt%, more preferably 0 to 15 wt% of further additives.

If further additives are employed, the minimum amount is preferably 0.1 wt%, more preferably 0.25 wt%, most preferably 0.5 wt%.

The thermoplastic molding compositions of the invention can comprise as component E conventional processing aids, further stabilizers, oxidation retarders, agents to counteract decomposition by heat and decomposition by ultraviolet light, lubricants and mold-release agents, colorants, such as dyes and pigments, nucleating agents, plasticizers, etc.

The molding compositions of the invention can comprise, as component E1, from 0.05 to 3 wt%, preferably from 0.1 to 1.5 wt%, and in particular from 0.1 to 1 wt% of a lubricant.

Preference is given to the salts of Al, of alkali metals, or of alkaline earth metals, or esters or amides of fatty acids having from 10 to 44 carbon atoms, preferably having from 12 to 44 carbon atoms.

The metal ions are preferably alkaline earth metal and Al, particular preference being given to Ca or Mg.

Preferred metal salts are Ca stearate and Ca montanate, and also Al stearate.

It is also possible to use a mixture of various salts, in any desired mixing ratio.

The carboxylic acids can be monobasic or dibasic. Examples which may be mentioned are pelargonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols can be monohydric to tetrahydric. Examples of alcohols are n-butanol, n-octanol, stearyl alcohol, ethylene glycol, propylene glycol, neopentyl glycol, pentaerythritol, preference being given to glycerol and pentaerythritol.

The aliphatic amines can be mono- to tribasic. Examples of these are stearylamine, ethylenediamine, propylenediamine, hexamethylenediamine, di(6-aminohexyl)amine, particular preference being given to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use a mixture of various esters or amides, or of esters with amides in combination, in any desired mixing ratio.

As component E, the molding materials according to the invention can comprise preferably 0.01 to 3 wt%, particularly preferably 0.02 to 2 wt%, in particular 0.05 to 1.0 wt%, of at least one heat stabilizer based on the total weight of the composition.

The heat stabilizers are preferably selected from copper compounds, secondary aromatic amines, sterically hindered phenols, phosphites, phosphonites and mixtures thereof.

As component E, 0.05 to 3 wt%, preferably 0.1 to 2 wt%, in particular 0.1 to 1 wt% of at least one sterically hindered phenol antioxidant can be employed.

This component E preferably has a molecular weight of more than 500 g/mol, more preferably of more than 1000 g/mol. Additionally, component C should preferably exhibit a high thermal stability, e.g. maximum of 5% weight loss, more preferably maximum of 2% weight loss, measured under nitrogen at 300°C within a TGA (thermogravimetric analysis) experiment (40°C to 120°C with 10°C/min, isothermal the later temperature for 15 min followed by 120°C to 600°C at 20°C/min).

Component E has preferably at least one, more preferably at least two phenol groups substituted by at least one branched C₃₋₁₂-alkyl group as sterically hindering group. The substituted phenol groups are covalently linked with the structure of component E.

Suitable sterically hindered phenols E are in principle all of the compounds which have a phenolic structure and which have at least one bulky group on the phenolic ring. A bulky group is for example a branched C₃₋₁₂ alkyl group, preferably a branched C₃₋₆ alkyl group, more preferably an isopropyl or tert.-butyl group.

Antioxidants of the above mentioned type are described by way of example in DE-A 27 02 661 (US-A 4 360 617).

Another group of preferred sterically hindered phenols is provided by those derived from substituted phenylcarboxylic acids, in particular from substituted phenylpropionic acids, which preferably have at least one bulky group on the phenyl group. They contain at least one, preferably two covalently linked substituted phenylcarboxylic acid unit(s) in their structure, which preferably have at least one bulky group on the phenyl group.

Preferred phenylcarboxylic acids are phenyl C₁₋₁₂ carboxylic acids, more preferably phenyl C₂₋₆ carboxylic acids. The phenyl group is preferably a phenol group having at least one bulky group on the phenolic ring, as indicated above. Thus, the above-mentioned sterically hindered phenols are preferably covalently linked with a C₁₋₁₂ alkane carboxylic acid, more preferably a linear C₂₋₆ alkane carboxylic acid.

All of the following should be mentioned as examples of sterically hindered phenols:
2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)propionate] (Irganox^{®} 1010 from BASF SE), distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

Compounds which have proven particularly effective and which are therefore used with preference are 2,2'-methylenebis(4-methyl-6-tert-butylphenol), 1,6-hexanediol bis(3,5-di-tert-butyl-4-hydroxyphenyl)propionate (Irganox^{®} 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox^{®} 1098), and the products Irganox^{®} 245 and Irganox^{®} 1010 described above from BASF SE, which have particularly good suitability.

The molding compositions of the invention can comprise, as component E2, from 0.05 to 3 wt%, preferably from 0.1 to 1.5 wt%, and in particular from 0.1 to 1 wt% of a copper stabilizer, preferably of a Cu(I) halide, in particular in a mixture with an alkali metal halide, preferably KI, in particular in the ratio 1:4, or of a sterically hindered phenol, or a mixture of these.

Preferred salts of monovalent copper used are cuprous acetate, cuprous chloride, cuprous bromide, and cuprous iodide. The materials comprise these in amounts of from 5 to 500 ppm of copper, preferably from 10 to 250 ppm, based on polyamide.

The advantageous properties are in particular obtained if the copper is present with molecular distribution in the polyamide. This is achieved if a concentrate comprising the polyamide, and comprising a salt of monovalent copper, and comprising an alkali metal halide in the form of a solid, homogeneous solution is added to the molding composition. By way of example, a typical concentrate is composed of from 79 to 95 wt% of polyamide and from 21 to 5 wt% of a mixture composed of copper iodide or copper bromide and potassium iodide. The copper concentration in the solid homogeneous solution is preferably from 0.3 to 3 wt%, in particular from 0.5 to 2 wt%, based on the total weight of the solution, and the molar ratio of cuprous iodide to potassium iodide is from 1 to 11.5, preferably from 1 to 5.

Suitable polyamides for the concentrate are homopolyamides and copolyamides, in particular nylon 6.

According to a preferred embodiment of the present invention, the molding compositions are free from copper, specifically from copper stabilizers, such as Cu/(I)halides, and combinations of Cu(I)halides with alkali metal halides.

More preferably, the thermoplastic molding compositions of the present inventions are metal halide-free. Metal halide-free systems, so-called electro-friendly systems, are of high interest, since electro-mobility, electrification and connectivity are an increasing trend in almost all industries.

Therefore, the thermoplastic molding composition is preferably free from metal halides, specifically Cu halides and alkali metal halides.

UV stabilizers that may be mentioned, the amounts of which used are generally up to 2 wt%, based on the molding composition, are various substituted resorcinols, salicylates, benzotriazoles, and benzophenones. Nigrosine can also be employed.

Materials that can be added as colorants are inorganic pigments, such as titanium dioxide, ultramarine blue, iron oxide, and carbon black, and also organic pigments, such as phthalocyanines, quinacridones, perylenes, and also dyes, such as anthraquinones.

Materials that can be used as nucleating agents are sodium phenylphosphinate, aluminum oxide, silicon dioxide, and also preferably talc.

The thermoplastic molding compositions can furthermore contain flame retardants as component E, for example phosphazenes, at least one metal phophinate or phosphinic acid salt, halogen-containing flame retardants, melamine compounds, triazines, benzoguanidine compounds, allantoin compounds, cyanoguanidine, metal oxides, such as antimony trioxide, antimony pentoxide, sodium antimonate and similar metal oxides, and phosphorus, for example red phosphorus.

As component E, the thermoplastic molding materials can comprise 1.0 to 10.0 wt%, preferably 2.0 to 6.0 wt%, in particular 3.0 to 5.0 wt%, of at least one of the mentioned flame retardants.

The minimum amount of this component E is at least 1.0 wt%, preferably 2.0 wt%, in particular 3.0 wt%

The maximum amount of this component E is 10.0 wt%, preferably 6.0 wt%, particularly preferably 5.0 wt%.

These materials are suitable for the production of fibers, foils, and moldings of any type. Some examples follow: extruded pipes, for example for automotive applications (e.g. brake fluid pipes), cable leading systems or cable management systems (cable tie, corrugated pipe), shoe soles, matrices for the production of rubber pipes (mandrels), sport equipment like ski shoes or football shoes.

The following items define embodiments of the present invention.
1. The use of an aqueous lactam solution having a lactam content of 50 to 95 wt%, based on the total weight of water and lactam in the solution, as solvent for cross-linked phenolic polymers, preferably for lignin.
2. The use as defined in item 1, wherein the lactam is e-caprolactam.
3. An aqueous lactam solution having a lactam content of 50 to 95 wt%, based on the total weight of water and lactam in the solution, further containing 0.1 to 40 wt% of cross-linked phenolic polymers, preferably lignin, based on the amount of lactam in the solution.
4. The solution as defined in item 3, wherein the lactam is ε-caprolactam.
5. The solution as defined in item 4, having a caprolactam content of 75 to 95 wt%, preferably 78 to 87 wt%, based on the total weight of water and lactam in the solution.
6. The solution as defined in item 4 or 5, containing 0.5 to 30 wt%, preferably 1 to 20 wt% of lignin, based on the amount of lactam in the solution.
7. The use of an aqueous lactam solution having a lactam content of 50 to 95 wt%, based on the total weight of the solution, and further containing 0.1 to 40 wt% of cross-linked phenolic polymers, preferably lignin, based on the amount of lactam in the solution, for producing homogeneous polyamide/lignin blends.
8. The use as defined in item 7, wherein the lactam is ε-caprolactam and the polyamide is polyamide 6.
9. A process for producing homogeneous polyamide/lignin blends, involving the steps of ring-opening polymerizing of aqueous lactam with removal of water of an aqueous solution initially containing water and 50 to 95 wt% of lactam, based on the total weight of water and lactam in the solution and further containing 0.1 to 40 wt% of cross-linked phenolic polymers, preferably lignin, based on the amount of lactam in the solution.
10. The process as defined in item 9, wherein the lactam is ε-caprolactam and the polyamide is polyamide 6.
11. A thermoplastic molding composition comprising a) 40 to 100 wt% of a homogeneous polyamide/ lignin blend containing 0.1 to 40 wt%, based on the amount of polyamide, of lignin, the polyamide containing polymerized lactam units, as component A, b) 0 to 10 wt% of a polyamide not containing polymerized lactam units, as component B, c) 0 to 45 wt% of at least one elastomeric polymer, as component C, d) 0 to 60 wt% of at least one fibrous and/or particulate filler, as component D, e) 0 to 25 wt% of further additives, as component E, wherein the total of wt% of components A to E is 100 wt%, wherein component A is obtainable by a process involving the ring-opening polymerization of aqueous lactam with removal of water of an aqueous solution, initially containing water and 50 to 95 wt% of lactam, based on the total weight of water and lactam in the solution, and further containing 0.1 to 40 wt % of cross-linked phenolic polymers, preferably lignin, based on the amount of lactam in the solution.
12. The thermoplastic molding composition as defined in item 11, wherein the polyamide in component A is polyamide 6 and component A is obtainable by a process involving the ring-opening polymerization of aqueous ε-caprolactam with removal of water of an aqueous solution initially containing 50 to 95 wt% of ε-caprolactam, based on the total weight of water and lactam the solution, and further containing 0.1 to 40 wt% of liqnin, based on the amount of ε-caprolactam in the solution.
13. The use of a thermoplastic molding composition as defined in item 11 or 12 for forming moldings, fibers or foils.
14. A molding, fiber or foil made from the thermoplastic molding composition as defined in item 11 or 12.

The invention is further illustrated by the following examples.

### Examples

Various polyamides were synthesized in a batch process using stirred autoclaves. An aqueous monomer/lignin mixture was heated up to 240°C under pressure. After keeping a pressure of about 9 to 16 bar for 30 min, the outside temperature was raised to 260°C and the pressure was slowly released while water was condensed out of the system. The polymer melt was stirred at atmospheric pressure and 260°C until a certain melt viscosity (torque ~ 55 to 60 Nm) was reached. At the bottom of the vessel, the melt strand was released using nitrogen pressure. The strand was cooled down in a water bath and subsequently pelletized. Afterwards, the remaining monomers/oligomers of caprolactam were extracted for 16 h in hot water and the remaining material was dried under vacuo (80°C/50 mbar).

### Example 1

A softwood kraft lignin from Finland was used in the following experiments. Lignin was dissolved in a solvent system consisting of 80 wt% ε-caprolactam and 20 wt% water.

The amounts of lignin, based on caprolactam, are shown in the following Table 1.

**Table 1: PA 6 lignin compounds.**

| Sample no. | PA 6 + X% lignin | RV (H₂SO₄) | AEG | Extractables [wt%] |
|---|---|---|---|---|
| 1 | 0 | 2.59 | 59.1 | - |
| 2 | 1 | 2.45 | 55.8 | 9.8 |
| 3 | 2 | 2.29 | 53.7 | 7.1 |
| 4 | 5 | 2.07 | 47.3 | 9.6 |
| 5 | 10 | 1.79 | 58.3 | 9.5 |
| 6 | 15 | 1.58 | 65.3 | - |
| 7 | 20 | 1.42 | 85 | - |

The relative viscosity RV was determined by viscosity measurement according to DIN ISO307 (version valid in 2020). 96% H₂SO₄ was used as solvent.

The amine end group content AEG was determined by following procedure: 1 g of polyamide was dissolved in 30 mL of a phenol/methanol mixture (75:25 m/m). The solution was titrated using 0,02N aqueous HCl-solution.

The content of extractables was determined by methanol extraction according to DIN ISO 6427 (version valid in 2020): Polyamide granules were extracted in boiling Methanol for 16 h. Extractables dissolved by methanol are determined by gravimetry.

As shown in Table 1, up to 20 wt% of lignin dissolved in aqueous CPL were copolymerized to PA 6 lignin compounds. These compounds were homogeneous, e.g. homogeneous color throughout the compound particles, and no phase separation of lignin particles were observed. The obtained relative viscosities (RV) were in the range of typical PA materials (e.g. 1.5 to 2.7), proving that lignin did not interfere with the polymerization of caprolactam (CPL). Analytical data showed no effect on the residual primary amine end groups (AEG) and on extractables (e.g. unreacted CPL and its oligomers).

Thermal properties of the PA 6 lignin compounds were only slightly affected by the addition of up to 10 wt% lignin. Table 2 shows key thermal parameters obtained from DSC (Differential Scanning Calorimetry) measurements. DSC measurements were done using heat/cooling rate of 20K/min in a temperature range of 0 to 280°C. Values for sT_{g}2, Tₘ2 were taken from the 2^{nd} heating run, values for T_{K} and T_{KB} were taken from the 2^{nd} cooling run.

**Table 2: Thermal properties of PA 6 lignin compounds.**

| Sample no. | PA 6 + X% lignin | T_{KB} [°C] | T_{K} [°C] | T_{g}2 [°C] | Tₘ2 [°C] |
|---|---|---|---|---|---|
| 1 | 0 | 188.86 | 172.78 | 54 | 220.6 |
| 2 | 1 | 188.09 | 171.61 | 56 | 221.08 |
| 3 | 2 | 185.07 | 171.5 | 54 | 219 |
| 4 | 5 | 184.3 | 168.5 | 55 | 220 |
| 5 | 10 | 178 | 162.89 | 58 | 215.09 |

As shown in Table 2, the start and peak temperature of crystallization (T_{KB} and T_{K}) did only change slightly upon increasing lignin content. Glass transition and melting temperature (T_{g}, Tₘ) remained essentially unchanged.

### Example 2

To further broaden the concept, different lignin sources were tested. Kraft lignins from the northern (Canada) and southern hemisphere (Brazil) were applied in 2 wt% and 5 wt% caprolactam solution. All obtained PA 6 lignin compounds were homogeneous. Thermal properties of the compounds showed negligible changes in key figures. Datasets are shown in Table 3.

**Table 3: Thermal orooerties of PA 6 linin comoounds.**

| Sample no. | PA 6 + X% lignin | T_{KB} [°C] | T_{K} [°C] | T_{g}2 [°C] | Tₘ2 [°C] |
|---|---|---|---|---|---|
| 1 | PA 6 reference | 188.9 | 172.8 | 54 | 220.6 |
| 8 | PA 6 + 2% softwood kraft lignin (Finland) | 192 | 180.4 | 56 | 219.2 |
| 9 | PA 6 + 5% softwood kraft lignin (Finland) | 189 | 172.1 | 53 | 217 |
| 10 | PA 6 + 2% softwood kraft lignin (Canada) | 194 | 175.5 | 56 | 218.9 |
| 11 | PA 6 + 5% softwood kraft lignin (Canada) | 191 | 172.8 | 56 | 217.9 |
| 12 | PA 6 + 2% hardwood kraft lignin (Brazil*) | 189 | 180,4 | 55 | 218,4 |
| 13 | PA 6 + 5% hardwood kraft lignin (Brazil*) | 188 | 178,2 | 57 | 216,9 |

| | | | | | |
|---|---|---|---|---|---|
| * 90% Hybrid Eucalyptus Urograndis + 10% mixture of Eucalyptus Urophylla & Eucalyptus Grandis grown in Brazil | | | | | |

### Example 3

To prove the versatility of this system, polyamide copolymers containing softwood kraft lignin (Finland) were synthesized. To this end, an aqueous caprolactam solution containing 1 to 5 wt% lignin was mixed with a certain amount of comonomer (e.g. adipic acid / hexamethylendiamine salt = AH salt or hexamethylenediamine / C₃₆-acid salt = 6.36 salt). Copolymerisation was done using standard reaction conditions. The results are presented in Table 4.

**Table 4: Lignin polyamide copolymers.**

| Sample no. | Co-PA | CPL [wt%] | AH salt [wt%] | 6.36 salt [wt%] | X% lignin |
|---|---|---|---|---|---|
| 14 | PA 6/6.6 | 85 | 15 | | 0 |
| 15 | PA 6/6.6 | 85 | 15 | | 1 |
| 16 | PA 6/6.6 | 85 | 15 | | 2 |
| 17 | PA 6/6.6 | 85 | 15 | | 5 |
| 18 | PA 6/6.36 | 70 | | 30 | 0 |
| 19 | PA 6/6.36 | 70 | | 30 | 1 |
| 20 | PA 6/6.36 | 70 | | 30 | 2 |
| 21 | PA 6/6.36 | 70 | | 30 | 5 |

All obtained PA lignin compounds were homogeneous. Properties were similar to the non-lignin compounds. Datasets are shown in Table 5.

**Table 5: Data of lignin polyamide copolymers.**

| Sample no. | RV (H₂SO₄) | RV (PODB) | AEG [mmol/kg] |
|---|---|---|---|
| 14 | 2.45 | | 69.0 |
| 15 | 2.41 | | 60.9 |
| 16 | 2.34 | | 59.3 |
| 17 | 2.24 | | 53.5 |
| 18 | | 2.70 | 71 |
| 19 | | 2.64 | 31.9 |
| 20 | | 2.58 | 57.2 |
| 21 | | 2.68 | 49.3 |

### Example 4

PA 6 lignin compounds were prepared according to the present invention, example 1, and for comparison by blending the lignin powder in PA 6 with the help of an extruder.

Samples no. 3 and 4 are prepared according to the present invention example 1 and contain 2 wt% and 5 wt% lignin dissolved in the solvent system.

For the PA 6 lignin compounds according to the present invention, sample no. 3 and 4 of Example 1 were used to prepare foils having a thickness of 100 µm and injection-molded plates having dimensions 30 x 30 x 1 mm. They were prepared by melting granules of the PA 6 lignin compounds at 260 °C and injection-molding at a mold temperature of 80 °C. After cooling to room temperature, the plates were removed from the mold. Comparative samples no. c1, c2 and c3 contain 1 wt%, 2 wt% and 5 wt% lignin as employed in example 1 added in powder form to PA 6.

For the comparative tests, 1 wt%, 2 wt% of lignin or 5 wt% of lignin were added to the PA 6 of Example 1 in the extruder. The softwood kraft lignin from Finland as in Example 1 was used.

Again, foils and injection-molded plates were prepared.

From the visual examination of the foils, it is evident that the foils prepared according to the present invention according to samples no. 3 and 4 do not show any black spots, but have a homogeneous appearance. The foils prepared according to the comparative test showed small black spots as defects (bad spots), indicating inhomogeneity of the blend due to lignin phases.

Transparency measurements were performed on the molded plates using a haze-gard plus of BYK Gardner. Total transmission was determined according to ASTM D 1003.

The results are shown in Table 6.

**Table 6: Transparency measurements of PA 6 lignin compounds**

| Sample no. | Total transmission (%) |
|---|---|
| c1 | 24.3 |
| c2 | 17.1 |
| c3 | 6.8 |
| 3 | 0.6 |
| 4 | 0.0 |

A lower transmission indicates a more homogenous distribution of the lignin in the polyamide matrix.

The total transmission for the plates prepared according to the present invention is very small due to the homogeneous distribution of the lignin in the PA 6. The total transmission of the comparative samples is higher due to the larger domains of lignin in the polyamide matrix. The results show that the preparation of the PA 6 lignin compounds according to the present invention leads to a better distribution of the lignin in the polyamide compared to the comparative samples.

The compounds according to the invention are more homogenous than the comparative compounds.

## Claims

1. The use of an aqueous lactam solution having a lactam content of 50 to 95 wt%, based on the total weight of water and lactam in the solution, as solvent for cross-linked phenolic polymers, preferably for lignin.

2. The use as claimed in claim 1, wherein the lactam is ε-caprolactam.

3. An aqueous lactam solution having a lactam content of 50 to 95 wt%, based on the total weight of water and lactam in the solution, further containing 0.1 to 40 wt% of cross-linked phenolic polymers, preferably lignin, based on the amount of lactam in the solution.

4. The solution as claimed in claim 3, wherein the lactam is ε-caprolactam.

5. The solution as claimed in claim 4, having a caprolactam content of 75 to 95 wt%, preferably 78 to 87 wt%, based on the total weight of water and lactam in the solution.

6. The solution as claimed in claim 4 or 5, containing 0.5 to 30 wt%, preferably 1 to 20 wt% of lignin, based on the amount of lactam in the solution.

7. The use of an aqueous lactam solution having a lactam content of 50 to 95 wt%, based on the total weight of the solution, and further containing 0.1 to 40 wt% of cross-linked phenolic polymers, preferably lignin, based on the amount of lactam in the solution, for producing homogeneous polyamide/lignin blends.

8. The use as claimed in claim 7, wherein the lactam is ε-caprolactam and the polyamide is polyamide 6.

9. A process for producing homogeneous polyamide/lignin blends, involving the steps of ring-opening polymerizing of aqueous lactam with removal of water of an aqueous solution initially containing water and 50 to 95 wt% of lactam, based on the total weight of water and lactam in the solution and further containing 0.1 to 40 wt% of cross-linked phenolic polymers, preferably lignin, based on the amount of lactam in the solution.

10. The process as claimed in claim 9, wherein the lactam is ε-caprolactam and the polyamide is polyamide 6.

11. A thermoplastic molding composition comprising
a) 40 to 100 wt% of a homogeneous polyamide/lignin blend containing 0.1 to 40 wt%, based on the amount of polyamide, of lignin, the polyamide containing polymerized lactam units, as component A,
b) 0 to 10 wt% of a polyamide not containing polymerized lactam units, as component B,
c) 0 to 45 wt% of at least one elastomeric polymer, as component C,
d) 0 to 60 wt% of at least one fibrous and/or particulate filler, as component D,
e) 0 to 25 wt% of further additives, as component E,
wherein the total of wt% of components A to E is 100 wt%, wherein component A is obtainable by a process involving the ring-opening polymerization of aqueous lactam with removal of water of an aqueous solution, initially containing water and 50 to 95 wt% of lactam, based on the total weight of water and lactam in the solution, and further containing 0.1 to 40 wt% of cross-linked phenolic polymers, preferably lignin, based on the amount of lactam in the solution.

12. The thermoplastic molding composition as claimed in claim 11, wherein the polyamide in component A is polyamide 6 and component A is obtainable by a process involving the ring-opening polymerization of aqueous ε-caprolactam with removal of water of an aqueous solution initially containing 50 to 95 wt% of ε-caprolactam, based on the total weight of water and lactam the solution, and further containing 0.1 to 40 wt% of lignin, based on the amount of ε-caprolactam in the solution.

13. The use of a thermoplastic molding composition as claimed in one of claims 11 or 12 for forming moldings, fibers or foils.

14. A molding, fiber or foil made from the thermoplastic molding composition as claimed in one of claims 11 or 12.

## Patentansprüche

1. Verwendung einer wässrigen Lactam-Lösung mit einem Lactam-Gehalt von 50 bis 95 Gew.-%, bezogen auf das Gesamtgewicht an Wasser und Lactam in der Lösung, als Lösungsmittel für vernetzte phenolische Polymere, vorzugsweise für Lignin.

2. Verwendung nach Anspruch 1, wobei das Lactam ε-Caprolactam ist.

3. Wässrige Lactam-Lösung mit einem Lactam-Gehalt von 50 bis 95 Gew.-%, bezogen auf das Gesamtgewicht an Wasser und Lactam in der Lösung, die ferner zu 0,1 bis 40 Gew.-% vernetzte phenolische Polymere, vorzugsweise Lignin, bezogen auf die Menge an Lactam in der Lösung, enthält.

4. Lösung nach Anspruch 3, wobei das Lactam ε-Caprolactam ist.

5. Lösung nach Anspruch 4, mit einem Caprolactam-Gehalt von 75 bis 95 Gew.-%, vorzugsweise 78 bis 87 Gew.-%, bezogen auf das Gesamtgewicht an Wasser und Lactam in der Lösung.

6. Lösung nach Anspruch 4 oder 5, die zu 0,5 bis 30 Gew.-%, vorzugsweise 1 bis 20 Gew.-%, Lignin, bezogen auf die Menge an Lactam in der Lösung, enthält.

7. Verwendung einer wässrigen Lactam-Lösung mit einem Lactam-Gehalt von 50 bis 95 Gew.-%, bezogen auf das Gesamtgewicht der Lösung, die ferner zu 0,1 bis 40 Gew.-% vernetzte phenolische Polymere, vorzugsweise Lignin, bezogen auf die Menge an Lactam in der Lösung, enthält, zum Herstellen homogener Polyamid/Lignin-Mischungen.

8. Verwendung nach Anspruch 7, wobei das Lactam ε-Caprolactam ist und das Polyamid Polyamid 6 ist.

9. Verfahren zum Herstellen homogener Polyamid/Lignin-Mischungen, umfassend die Schritte der ringöffnenden Polymerisation von wässrigem Lactam mit Entfernung von Wasser aus einer wässrigen Lösung, die anfänglich Wasser und zu 50 bis 95 Gew.-% Lactam enthält, bezogen auf das Gesamtgewicht an Wasser und Lactam in der Lösung, und ferner zu 0,1 bis 40 Gew.-% vernetzte phenolische Polymere, vorzugsweise Lignin, bezogen auf die Menge an Lactam in der Lösung, enthält.

10. Verfahren nach Anspruch 9, wobei das Lactam ε-Caprolactam ist und das Polyamid Polyamid 6 ist.

11. Thermoplastische Formmasse, umfassend
a) zu 40 bis 100 Gew.-% eine homogene Polyamid/Lignin-Mischung, die zu 0,1 bis 40 Gew.-%, bezogen auf die Menge an Polyamid, Lignin enthält, wobei das Polyamid polymerisierte Lactam-Einheiten enthält, als Komponente A,
b) zu 0 bis 10 Gew.-% ein Polyamid, das keine polymerisierten Lactam-Einheiten enthält, als Komponente B,
c) zu 0 bis 45 Gew.-% mindestens ein elastomeres Polymer als Komponente C,
d) zu 0 bis 60 Gew.-% mindestens einen faser- und/oder teilchenförmigen Füllstoff als Komponente D,
e) zu 0 bis 25 Gew.-% weitere Zusatzstoffe als Komponente E,
wobei die Gesamtheit der Gew.-% der Komponenten A bis E 100 Gew.-% beträgt, wobei Komponente A durch ein Verfahren erhältlich ist, das die ringöffnende Polymerisation von wässrigem Lactam mit Entfernung von Wasser aus einer wässrigen Lösung umfasst, die anfänglich Wasser und zu 50 bis 95 Gew.-% Lactam enthält, bezogen auf das Gesamtgewicht an Wasser und Lactam in der Lösung, und ferner zu 0,1 bis 40 Gew.-% vernetzte phenolische Polymere, vorzugsweise Lignin, bezogen auf die Menge an Lactam in der Lösung, enthält.

12. Thermoplastische Formmasse nach Anspruch 11, wobei das Polyamid in Komponente A Polyamid 6 ist und Komponente A durch ein Verfahren erhältlich ist, das die ringöffnende Polymerisation von wässrigem ε-Caprolactam mit Entfernung von Wasser aus einer wässrigen Lösung umfasst, die anfänglich zu 50 bis 95 Gew.-% ε-Caprolactam enthält, bezogen auf das Gesamtgewicht an Wasser und Lactam in der Lösung, und ferner zu 0,1 bis 40 Gew.-% Lignin, bezogen auf die Menge an ε-Caprolactam in der Lösung, enthält.

13. Verwendung einer thermoplastischen Formmasse nach einem der Ansprüche 11 oder 12 zum Ausbilden von Formteilen, Fasern oder Folien.

14. Formteil, Faser oder Folie, hergestellt aus der thermoplastischen Formmasse nach einem der Ansprüche 11 oder 12.

## Revendications

1. Utilisation d'une solution aqueuse de lactame ayant une teneur en lactame de 50 à 95 % en poids, par rapport au poids total d'eau et de lactame dans la solution, comme solvant pour des polymères phénoliques réticulés, de préférence pour une lignine.

2. Utilisation selon la revendication 1, dans laquelle le lactame est l'ε-caprolactame.

3. Solution aqueuse de lactame ayant une teneur en lactame de 50 à 95 % en poids, par rapport au poids total d'eau et de lactame dans la solution, contenant en outre 0,1 à 40 % en poids de polymères phénoliques réticulés, de préférence de la lignine, par rapport à la quantité de lactame dans la solution.

4. Solution selon la revendication 3, dans laquelle le lactame est l'ε-caprolactame.

5. Solution selon la revendication 4, ayant une teneur en caprolactame de 75 à 95 % en poids, de préférence de 78 à 87 % en poids, par rapport au poids total d'eau et de lactame dans la solution.

6. Solution selon la revendication 4 ou 5, contenant 0,5 à 30 % en poids, de préférence 1 à 20 % en poids de lignine, par rapport à la quantité de lactame dans la solution.

7. Utilisation d'une solution aqueuse de lactame ayant une teneur en lactame de 50 à 95 % en poids, par rapport au poids total de la solution, et contenant en outre 0,1 à 40 % en poids de polymères phénoliques réticulés, de préférence de la lignine, par rapport à la quantité de lactame dans la solution, pour la production de mélanges homogènes de polyamide/lignine.

8. Utilisation selon la revendication 7, dans laquelle le lactame est l'ε-caprolactame et le polyamide est le polyamide 6.

9. Procédé de production de mélanges homogènes de polyamide/lignine, impliquant les étapes de polymérisation par ouverture de cycle de lactame aqueux avec élimination d'eau d'une solution aqueuse contenant initialement de l'eau et 50 à 95 % en poids de lactame, par rapport au poids total d'eau et de lactame dans la solution, et contenant en outre 0,1 à 40 % en poids de polymères phénoliques réticulés, de préférence de la lignine, par rapport à la quantité de lactame dans la solution.

10. Procédé selon la revendication 9, dans lequel le lactame est l'ε-caprolactame et le polyamide est le polyamide 6.

11. Composition de moulage thermoplastique comprenant
a) 40 à 100 % en poids d'un mélange homogène de polyamide/lignine contenant 0,1 à 40 % en poids, par rapport à la quantité de polyamide, de lignine, le polyamide contenant des motifs de lactame polymérisés, comme composant A,
b) 0 à 10 % en poids d'un polyamide ne contenant pas de motifs de lactame polymérisés, comme composant B,
c) 0 à 45 % en poids d'au moins un polymère élastomérique, comme composant C,
d) 0 à 60 % en poids d'au moins une charge fibreuse et/ou particulaire, comme composant D,
e) 0 à 25 % en poids d'additifs supplémentaires, comme composant E,
dans laquelle le total des % en poids des composants A à E est de 100 % en poids, le composant A pouvant être obtenu par un procédé impliquant la polymérisation par ouverture de cycle de lactame aqueux avec élimination d'eau d'une solution aqueuse, contenant initialement de l'eau et 50 à 95 % en poids de lactame, par rapport au poids total d'eau et de lactame dans la solution, et contenant en outre 0,1 à 40 % en poids de polymères phénoliques réticulés, de préférence de la lignine, par rapport à la quantité de lactame dans la solution.

12. Composition de moulage thermoplastique selon la revendication 11, dans laquelle le polyamide dans le composant A est le polyamide 6 et le composant A peut être obtenu par un procédé impliquant la polymérisation par ouverture de cycle d'ε-caprolactame aqueux avec élimination d'eau d'une solution aqueuse contenant initialement 50 à 95 % en poids d'ε-caprolactame, par rapport au poids total d'eau et de lactame de la solution, et contenant en outre 0,1 à 40 % en poids de lignine, par rapport à la quantité d'ε-caprolactame dans la solution.

13. Utilisation d'une composition de moulage thermoplastique selon l'une des revendications 11 ou 12 pour la formation de moulages, de fibres ou de feuilles.

14. Moulage, fibre ou feuille fabriqué(e) à partir de la composition de moulage thermoplastique selon l'une des revendications 11 ou 12.
